# EUROPEAN PATENT SPECIFICATION

(11) **EP 2 573 780 B1**
(45) Date of publication and mention of the grant of the patent: **18.11.2015**
(21) Application number: 12184637.2
(22) Date of filing: 17.09.2012
(51) Int. Cl.: H01F 27/28, H01F 27/32, H01P 1/20, H04B 3/56, H01F 37/00

(54) **A line trap for transmission systems on medium/high voltage AC power lines**
Leitungssperre für Übertragungssystem auf Wechselstromleitungen mit mittlerer/hoher Spannung
Circuit bouchon pour systèmes de transmission sur lignes de transport d'électricité en courant alternatif MT/HT

(30) Priority: 23.09.2011 IT MI20111716
(43) Date of publication of application: 27.03.2013
(73) Proprietor: Bertel S.p.A., 20123 Milano (IT)
(72) Inventor: Bertolini, Giuseppe, 42027 Montecchio (RE) (IT)
(74) Representative: Frignoli, Luigi

(56) References cited:
- DE-A1- 2 241 975
- DE-A1- 19 839 987
- DE-B- 1 183 959
- US-A- 2 497 516

## Description

The present invention relates to line traps for transmission systems on medium/high voltage AC medium/high voltages.

Line traps are well known and widely used to transmit (by a method commonly identified by the symbol PLC) waves conveyed along medium/high voltage alternating current power lines, i.e. to transmit signals, information, voice and data, along segments of a long-distance line, such segments being bounded by line traps connected in series with the line, to form a high impedance for the signal transmission frequencies and a negligible impedance for the frequency of the electric current transported by the medium/high voltage line. These line traps are subjected to very high stresses because they have to be able to withstand both high line currents (the voltage of which can be many tens or hundreds of KV) and short-duration short-circuit currents at the point in which such coils are installed. As is apparent, such electric currents generate very intense magnetic fields which subject the line traps to very high mechanical forces, especially at peak value of the short-circuit current.

As already stated, the line traps have a well known structure: summarizing, it can be stated that these comprise a continuously wound solenoid made of high electrical conductivity metal (most usually of aluminium), each turn being separated from the adjacent turn by spacers made of electrically insulating metal: these spacers have to prevent mutual movement between the metal turns. The line traps have to respect very severe IEC standards (the most stringent of which is the IEC 357 standard published in 1989-11).

Known coils consist of continuous spirals formed from turns of coils (generally of aluminium) having quadrangular (generally square) cross-section: the spacers assume different shapes and structures; for example they are made of continuous glass fibres which embrace the outer surface of each coil, then extend along the upper surface of the same coil to pass beyond its inner upper edge and then fold about itself to pass below the lower surface of the coil of that turn superimposed on that firstly considered, then fold such as to be superimposed on the outer surface of said turn, and so on, to lie on the opposing surfaces and on the outer surfaces of all the turns. The continuous glass fibres form enlargements at those points where they are folded on themselves, at and beyond the side edges of the coil turns.

Other types of insulating spacers consist of elements of insulating material (for example made of fibreglass) of substantially U or H cross-section to define seats within which portions of one or two opposing coil turns are housed, the surfaces of which are thus kept spaced from each other.

The entire surface of the coil turns and spacers is sprayed with a two-component epoxy resin, with cold curing to prevent any empty spaces - even very small - remaining between the opposing surfaces of the spacers and coil turns, in order to prevent even very small mutual movements between the various spirals under the action of the electric current.

The aforesaid metal turns and spacers present the drawback of not being able to reliably prevent either the sliding or mutual movement of one coil turn relative to each coil turn adjacent to it, or the flexing of the turn following passage of high voltage electric current through it.

The prior art documents US3991394A, US2497516A and DE2241975A deal with line traps for transmission systems on medium/high voltage AC power lines.

US3991394 shows an inductor for medium/high voltages power lines, the inductor having seven layers (numbered 1 through 7) which are held together and fastened to the supports by strand material and cement. Each of these seven layers comprises four coils having rectangular conductors.

The main object of the present invention is to provide line traps which are of very simple construction, which ensure very high indeformability and which minimize the possibility of transverse displacement and flexure of one coil turn relative to those adjacent to it by the effect of the electric current passing through the coil turns and in particular by the effect of mechanical forces produced by asymmetric peak values of short duration short-circuit currents.

This and other objects are attained by line traps formed of high electrical conductivity metal coil turns (preferably of aluminium or copper), of substantially H cross-section, defining a continuous channel or recess in each of the two opposing surfaces of each metal turn with respect to that adjacent to it, in these cavities there being positioned and retained spacers which are continuous or are in the form of consecutive contacting pieces, to hence form a safe anchorage of each coil turn to the turn adjacent to it in the continuous spiral of metal coil turns forming the windings or solenoids of the line traps.

Line traps are known to be retained by two robust head or end spider supports. The ends of the electrical connection plates or stubs are fixed to these metal spider supports and project to the outside of the coils windings or solenoids at these ends, to be connected to the high voltage lines. The line traps are connected in series with the lines: the two end spider supports of each line trap are securely connected together by insulating tie rods of various types, such as stainless steel rods the two ends of which (extending through holes provided in the metal spider supports) are threaded and are locked onto the metal spider supports, via interposed ceramic or insulating resin insulators, by means of nuts and locking nuts. Stainless steel tie rods are also known which are inserted (and electrically protected) through holes in resin or glass insulators which provide electrical insulation between the two spider supports of each line trap: these known solutions present the drawback of being costly and of not enabling the metal turns and the relative spacers to be strongly compressed between the two end spider supports of each line trap.

A further object of the present invention is therefore to provide tie rods of simple structure and easy installation, which enable the metal coil turns and spacers to be highly compressed between the end spider supports of each line trap.

This object is attained by tie rods wholly formed with resin-impregnated fibreglass rods, at least the two ends of which are threaded and fixed into the outer surfaces of each spider simply by nuts and locking nuts screwed onto the threaded ends of said rods projecting to the outside of the spider supports through holes provided in the metal spider supports themselves. The characteristics of a line trap according to the present invention are those specified in claims from 1 to 4 as reproduced at the end of the present description.

In order to clarify the comprehension of the structure and characteristics of a blocking line trap of the present invention, a preferred but non-limiting embodiment will now be described with reference to the accompanying drawing, in which:
Figure 1 is an enlarged section through a portion of a line trap having spacers inserted into and retained in recesses or continuous channels defined on the opposed surfaces of the coil turns forming the trap; and
Figure 2 is a longitudinal section through a line trap whose spider supports are kept united and compressed towards each other by means of threaded tie rods made of fibreglass, their free ends being retained on the respective spider supports only by nuts and locking nuts.

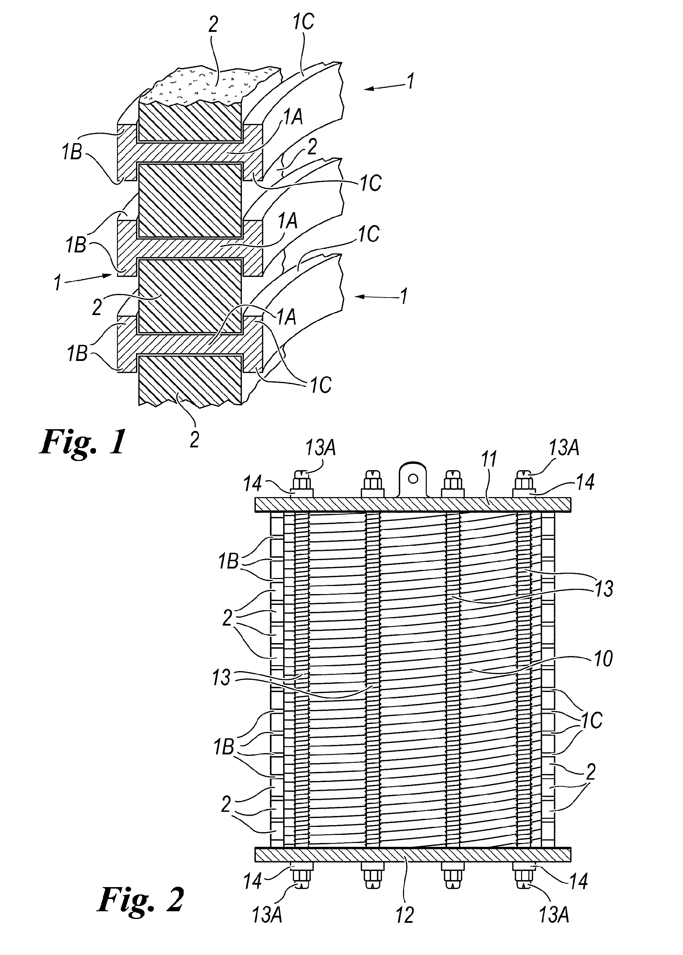

Reference will be firstly made to Figure 1, showing a perspective section through a portion of a winding or solenoid formed by a continuous spiral of electrically conductive metal coil turns with relevant spacers, forming part of a blocking line trap, the other parts or components of which have been omitted because their structure is well known and is evident to an expert of the art.

The drawing shows three portions of a metal coil turn 1 (wound as a solenoid in the line trap) kept separated by spacers 2 of insulating material. The spacers can be formed from spacer pieces or portions which are separate but placed together in the manner of a continuous spiral, while the coil, turns are formed from a continuous bar of electrically conductive metal (for example Al or Cu) wound such as to form a continuous spiral, with a plurality of side-by-side turns spaced apart by the spacers 2.

The main characteristic of the line trap to which the present invention relates is that the coil turns 1 have a substantially H cross-section, with the central part 1A substantially flat and with two lateral flanges 1B, 1C, and which together define (and on each side of the coil turns 1) a continuous recess or channel (which can be slightly flared outwards at the free ends of the flanges 1B, 1C) in which the spacers 2 are housed and brought together to hence also form a continuous spiral which retains the spiral turns 1 securely fixed together, to prevent their axial or transverse displacement or deformation. The inner and outer surfaces of the spirals 1 and 2 can be possibly sprayed with a two-component epoxy resin, with cold curing. In this manner a line trap can be obtained which satisfies the most severe requirements of IEC 353 of 1989.

Reference will now be made to Figure 2 which schematically represents very partially a line trap, the spiral of which is indicated overall by the reference numeral 10. This spiral 10 is retained and securely locked between two end metal spider supports (an upper one indicated by the reference numeral 11 and a lower one indicated by the reference numeral 12) of known type, these spider supports 11, 12 presenting holes through which the ends 13A of a plurality of tie rods 13 emerge.

The tie rods 13, 13A according to the present invention each consist of continuous fibreglass rods 13 impregnated with resin and threaded along their entire length or at least at those portions 13A which extend outside or beyond the spider supports 11, 12.

Nuts 14 (with locking nuts) are screwed onto the threaded ends 13A of the fibreglass tie rods to bear against the outer surfaces of the spider supports 11, 12, and exert thereon a very high pressure which ensures that the dimensional stability of the line trap on which they are applied is maintained.

The fibreglass rods, besides having a very simple structure and being provided with high tensile strength, are very easy to assemble, are of low cost, and do not require the use of any electrical insulation system specific for them.

## Claims

1. A line trap for transmission systems on medium/high voltage AC power lines, each trap comprising a continuous electrically conductive metal coil connectable in series with a medium/high voltage line, such metal coil being formed by at least a continuous spiral made with coil turns (1, 1A, 1B, 1C) which are wound as a solenoid and are kept spaced apart from each other by a series of spacers (2) made of an electrically insulating material, **characterised in that** said coil turns (1, 1A, 1B, 1C) have a substantially H cross-section such as to define on each of the opposed surfaces of such coil turns a recess or continuous channel in which said spacers (2) are housed and held, which spacers (2) create a safe anchorage of each coil turn to the coil turn adjacent to it in the continuous spiral of the coil turns.

2. A line trap according to claim 1, **characterised in that** said spacers (2) are arranged such as to form a spiral held in the opposed channels or recesses of two coil turns (1; 1A, 1B, 1C) facing each other.

3. A line trap according to claims 1 and 2, **characterised in that** it is held between two metal spider supports (11, 12) that are firmly bound together by means of tie rods (13, 13A) made of continuous resin-impregnated fibreglass, at least the two ends (13A) of each rod (13, 13A) being threaded at least in those portions thereof extending outside or beyond said spider supports (11, 12), on which said rods are held by means of nuts (14) screwed on the threaded ends (13A) of the same rods.

4. A line trap according to claim 3, **characterised in that** said rods (13, 13A) made of resin and fibreglass are threaded throughout their length.

## Patentansprüche

1. Leitungssperre für Übertragungssystem auf Wechselstromleitungen mit mittlerer/hoher Spannung, wobei jede Sperre eine kontinuierliche leitende Spule aus Metall umfasst, die an einer Leitung mit mittlerer/hoher Spannung in Reihe geschaltet werden kann, wobei die genannte Spule aus Metall von mindestens einer kontinuierlichen Spirale gebildet ist, die mit spulen Windungen (1, 1A, 1B, 1C) hergestellt ist, die als Solenoid gewickelt sind und die durch eine Reihe von nichtleitenden Abstandshaltern (2) voneinander abgestandet sind, **dadurch gekennzeichnet, dass** die genannten Spulenwindungen (1, 1A, 1B, 1C) einen wesentlich H-förmigen Querschnitt haben, so dass sie eine ununterbrochene Ausnehmung oder Spalte an jeder der entgegengesetzten Oberflächen der genannten Spulenwindungen bestimmen, worin die genannten Abstandshalter (2) aufgenommen und befestigt sind, wobei die genannten Abstandshalter (2) eine zuverlässige Verankerung jeder Spulenwindung mit der anliegenden Spulenwindung der kontinuierlichen Spirale der Spulenwindungen bilden.

2. Leitungssperre nach Anspruch 1, **dadurch gekennzeichnet, dass** die genannten Abstandshalter (2) derart angeordnet sind, dass sie eine in den entgegengesetzten Spalten oder Ausnehmungen von zwei gegenüberliegenden Spulenwindungen (1, 1A, 1B, 1C) befestigte Spirale bilden.

3. Leitungssperre nach Ansprüchen 1 und 2, **dadurch gekennzeichnet, dass** sie zwischen zwei Spinnenbefestigungen (11, 12) aus Metall befestigt ist, wobei die Spinnenbefestigungen durch Spannstangen (13, 13A) aus Harz-getränkten kontinuierlichen Glasfasern miteinander streng verbunden sind, wobei mindestens die zwei Enden (13A) jeder Spannstange (13, 13A) mindestens in ihren entsprechenden sich außer oder jenseits der genannten Spinnenbefestigungen (11, 12) erstreckenden Teilen gewindeschnitten sind, wobei die genannten Spannstangen durch an den gewindeschnitten Enden (13A) der Spannstangen (13, 13A) selbst geschraubte Schraubenmutter (14) an den Spinnenbefestigungen befestigt sind.

4. Leitungssperre nach Anspruch 3, **dadurch gekennzeichnet, dass** die genannten Spannstangen (13, 13A) aus Harz und Glasfaser durchaus ihre Länge gewindeschnitten sind.

## Revendications

1. Circuit bouchon pour systèmes de transmission sur lignes de transport d'électricité en courant alternatif MT/HT, chaque bouchon comprenant une bobine continue de métal électriquement conductrice qui peut être branchée en série à une ligne MT/HT, ladite bobine de métal étant formée par au moins une spirale continue constituée de spires de bobine (1, 1A, 1B, 1C) roulées en solénoïde et écartées les unes des autres par une série d'espaceurs (2) en matériau électriquement isolant, **caractérisé en ce que** lesdites spires de bobine (1, 1A, 1B, 1C) ont une section transversale substantiellement à forme de H, de façon à définir sur chacune des surfaces opposées desdites spires de bobine un renfoncement ou un canal continu où lesdits espaceurs (2) sont logés et fixés, lesdits espaceurs (2) formant un ancrage en sécurité de chaque spire de bobine à la spire de bobine adjacente dans la spirale continue des spires de bobine.

2. Circuit bouchon selon la revendication 1, **caractérisé en ce que** lesdits espaceurs (2) sont agencés de façon à former une spirale fixée dans les canaux ou les renfoncements opposés de deux spires de bobine (1, 1A, 1B, 1C) faisant face l'une à l'autre.

3. Circuit bouchon selon les revendications 1 et 2, **caractérisé en ce qu'**il est fixé entre deux supports en pattes d'araignée (11, 12) de métal qui sont étroitement liés l'un à l'autre moyennant des tirants (13, 13A) en fibre de verre continue imprégnée de résine, au moins les deux extrémités (13A) de chaque tirant (13, 13A) étant filetées au moins dans leurs respectives portions étendues à l'extérieur ou au-delà desdits supports en pattes d'araignée (11, 12), sur lesquels lesdits tirants sont fixés moyennant des écrous (14) vissés sur les extrémités filetées (13A) des tirants (13, 13A) eux-mêmes.

4. Circuit bouchon selon la revendication 3, **caractérisé en ce que** lesdits tirants (13, 13A) en résine et fibre de verre sont filetés sur toute la longueur.
